# EUROPEAN PATENT APPLICATION

(11) **EP 0 825 071 A2**
(43) Date of publication of application: **25.02.1998**
(21) Application number: 97306174.0
(22) Date of filing: 14.08.1997
(51) Int. Cl.: B60R 21/02

(54) **A barrier for use in a vehicle**

(30) Priority: 15.08.1996 GB 9617152
(71) Applicant: ATHAG LIMITED, Atherstone, Warwickshire CV9 1LQ (GB)
(72) Inventor: Sharpe, Nicholas Simon, Nuneaton, Warwickshire CV10 0UE (GB)
(74) Representative: Croston, David

(57) **Abstract**

A barrier (10) for use in a vehicle comprises a frame (12) which supports a barrier section (30). The barrier section (30) is removable from the frame (12). In a preferred embodiment the frame (12) comprises a top part (16) with a fixed barrier section (20) and a bottom part (14) with a removable barrier section (30). In use, the top part (16) spans the area between the top of the rear seats and the roof of the vehicle. Where the vehicle has split/folding rear seats the removable barrier section (30) may comprise two separate removable barrier parts (Fig. 3).

## Description

The invention relates to a barrier for use in a vehicle, particularly for use in a vehicle where the rear passenger seats fold downwardly to increase the luggage space available.

Substantially flat barriers are known for use in vehicles where the rear seats fold down to increase the luggage space available. Such barriers are generally located semi-permanently in the vehicle and if the user wishes to carry a long load he must remove the whole barrier to accommodate the load.

It is an object of the invention to provide an improved form of barrier.

According to one aspect of the invention there is provided a barrier for use in a vehicle, the barrier comprising a frame supporting a barrier section removable from the frame.

In that way the barrier section can be removed from the frame to enable the user to use the full length of the cargo compartment without having to remove the barrier from the vehicle completely.

The frame may have mounting at a lower part thereof for mounting the frame to an existing fixture in a vehicle, preferably a seat mounting of the vehicle. Two such mountings may be provided.

Alternatively, or in addition to the mounting or mountings at a lower part of the frame, at least one side mounting may be provided on the side of the frame. Preferably two such mountings are provided, one each side of the frame. The or each side mounting preferably mounts the frame to an existing fixture in a vehicle, most preferably to a seat securing lug.

The barrier section may comprise location means at a bottom part thereof to locate at least part of the barrier section on the frame. The barrier section may comprise location means at one or both sides thereof.

The location means at the bottom part of the barrier section preferably comprises at least one part-cylindrical member arranged to cooperate with the bottom part of the frame. Preferably two such members are provided spaced from one another on the bottom part of the barrier section.

The location means at the side or sides of the barrier section may comprise a clamp for clamping a part of the frame. The clamp preferably comprises a first clamping jaw fixed to the barrier section and a second clamping jaw separate from the barrier section. The clamp may be actuated by means of a screw threaded fastener.

The frame may support a further barrier section. The further barrier section may be removable from the frame. Alternatively, the further barrier section may be fixed to the frame.

The frame preferably has a top part which supports one barrier section and a bottom part which supports the other barrier section. In a preferred embodiment, one barrier section is fixed permanently to the top part of the frame and the other barrier section is removably supported by the bottom part of the frame.

A partitioning barrier member may be provided for attachment to the barrier so as to partition the area behind the barrier into at least two parts.

Where the barrier is arranged in a vehicle extending from one side to the other side thereof, the partitioning barrier member preferably extends in the fore and aft direction of the vehicle.

The partitioning barrier member preferably includes a roof bracket for engaging a part of the roof of the vehicle in which it is mounted. The partitioning barrier member also includes floor engaging means for engaging a floor of the vehicle. The floor engaging means or roof bracket preferably has screwing adjustment means to effect up and down movement of the partitioning barrier member.

In that way, the partitioning barrier member is attached to the barrier and the screwing adjustment means is adjusted to secure the partitioning barrier member in the vehicle in compression between the roof and the floor.

The barrier preferably includes an attachment strip comprising an elongate member with a plurality of screw threaded apertures therein. The partitioning barrier member may comprise a bracket on its forward edge which is attachable by means of a fastener to the attachment strip on the barrier.

Where a partitioning barrier member is provided, the barrier section may comprise two separate barrier parts each of which is removably supported on the frame.

Preferably, the partitioning barrier member is attached to the barrier 60 percent of the way from one end of the barrier to another. In that case, the two separate barrier parts are preferably respectively 60 percent and 40 percent of the width of the barrier section in width.

In such a case, the barrier can be located in a vehicle with a 60/40 rear folding seat split and part of the cargo compartment can be partitioned off while the other part can be open with the seat folded and the respective barrier part removed.

Where the seat folding ratio differs, the size of the barrier parts and positioning of the partitioning barrier member is altered accordingly.

According to another aspect of the invention there is provided a barrier in a vehicle, the barrier comprising a frame supporting a barrier section removable from the frame.

In that case the barrier may be located behind the rear seats in the vehicle. The frame preferably has a top part which supports one barrier section and a bottom part which supports the other barrier section. In a preferred embodiment, one barrier section is fixed permanently to the top part of the frame and the other barrier section is removably supported by the bottom part of the frame. The top part of the frame preferably spans at least part of the space between the top of the rear seats and the roof the vehicle.

A barrier in accordance with one embodiment of the invention will now be described in detail, by way of example and with reference to the accompanying drawings in which:
Fig. 1 is an elevation of a barrier in accordance with the invention shown with the bottom barrier section removed from the frame;
Fig. 2 is an elevation of a bottom barrier section for use with the barrier of Fig 1;
Fig. 3 is an elevation of the barrier of Fig. 1 with the bottom barrier section of Fig. 2 in place on the frame;
Fig. 4 is a perspective view of one of the location feet of the bottom barrier section shown mounted on the frame;
Fig. 5 is an elevation of the side location clamp of the bottom barrier section shown attached to the frame;
Fig. 6 is a cross-section taken on line VI - VI of Fig. 5;
Fig. 7 is a perspective view of the side mounting arrangement of the frame of the barrier;
Figs. 8a & 8b are perspective views of the mounting arrangement of the bottom part of the frame of the barrier;
Fig.9 is a perspective view of the barrier of Figs.1 to 8b in place in a vehicle;
Fig 10 is a perspective view of an alternative side mounting arrangement of the barrier;
Fig. 11 is a perspective view of another barrier in accordance with the invention in place in a vehicle; and
Fig. 12 is a perspective view of a further barrier in accordance with the invention in place in a vehicle.

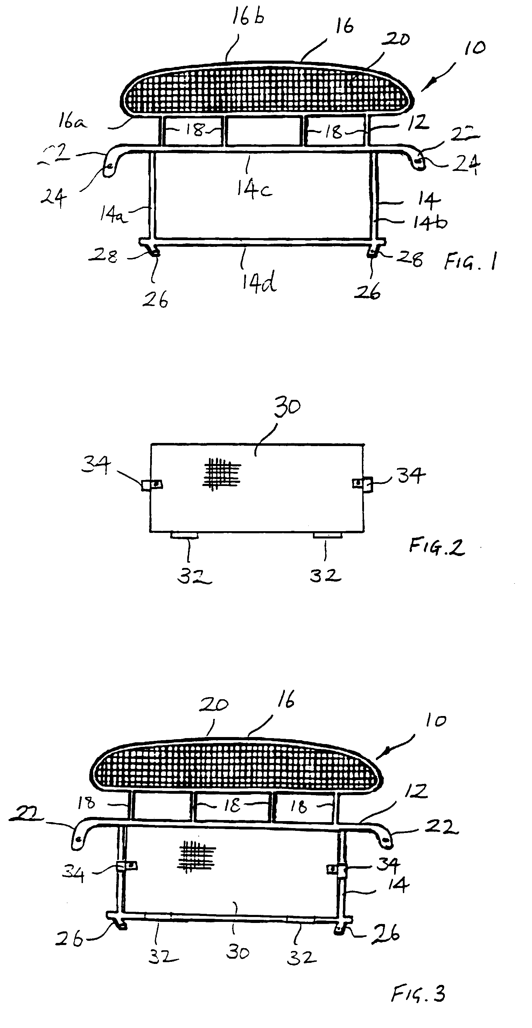

In Figure 1 a barrier 10 comprises a frame 12 of tubular steel having a bottom part 14 and a top part 16.

The bottom part 14 has upstanding side members 14a,14b, a horizontal top member 14c and a horizontal bottom member 14d. The bottom part 14 of the frame 12 defines a rectangular space for receiving a barrier section.

The top part 16 is spaced from the bottom part 14 by legs 18. The top part 16 has a lower member 16a which is substantially horizontal and a upper member 16b which is shaped to conform substantially with the roof of the vehicle in which the barrier 10 is to be located. The top part 16 carries a top barrier section 20 which spans the top-part 16 and comprises a metal grille. The top barrier 20 is permanently fixed to the top part 16 of the frame 12, for instance by welding.

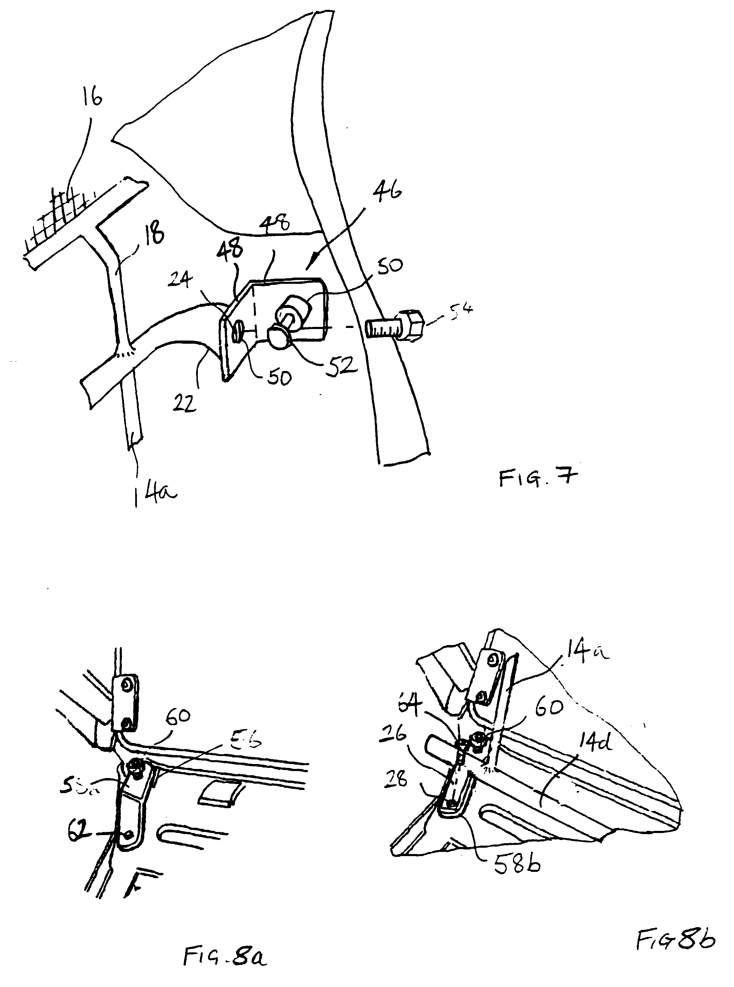

The barrier 10 includes side mountings 22, one at each end of the top member 14c of the bottom part 14 of the frame 12. Each side mounting 22 comprises an end portion of the top member 14c which is bent downwardly and flattened. An aperture 24 is formed through the flattened portion. One of the side mountings 22 is shown in more detail in Figure 7.

The barrier 10 also includes bottom mountings 26 which extend from the bottom member 14d of the bottom part 14 of the frame. The mountings 26 are spaced apart on the bottom member 14d, one mounting 26 being provided adjacent each end of the member 14d. Each mounting 26 comprises a plate having an aperture 28 therein. One of the bottom mountings 26 is illustrated in more detail in Figures 8a and 8b.

In Figure 2, a bottom barrier section 30 for location in the rectangular space defined by the bottom part 14 of the frame 12 is shown. The bottom barrier section 30 comprises a rectangular metal grille shape to fit into the aforementioned rectangular space. The bottom barrier section 30 is also provided with locating feet 32 spaced apart on a bottom edge thereof and side location clamps 34, one each side of the section 30.

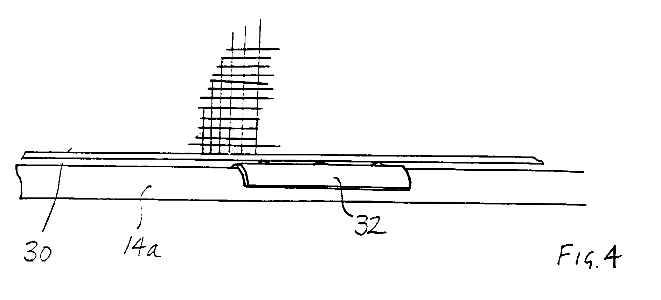

Each locating foot 32 comprises a part cylindrical member (see Figure 4) welded to the lower edge of the barrier section 30. Each foot 32 is arranged, when the barrier section 30 is received by the frame to cooperate with the bottom member 14d of the bottom part 14 of the frame 12 so as to secure the lower part of the barrier section against fore and aft movement in the vehicle.

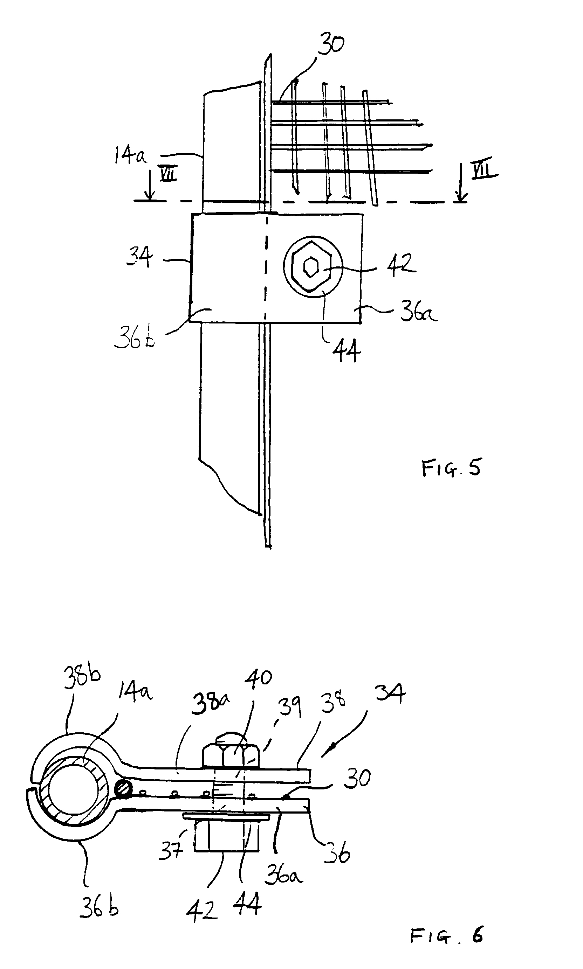

The construction and operation of one of the side locating clamps 34 is shown in more detail in Figures 5 and 6.

In Figures 5 and 6 the left hand clamp of the bottom barrier section as viewed in Figure 2 is shown. The clamp 34 comprises a first clamping jaw 36 fixed to the grille of the bottom barrier section 30 by welding. The first clamping jaw comprises a flat plate-like part 36a attached to the grille with an aperture 37 therethrough and a curved hook-like part 36b which protrudes from the side of the grille and is arranged to envelope part of the side member 14a of the bottom part 14 of the frame 12.

The clamp 34 further comprises a second clamping jaw 38 which is separate from the grille. The second clamping jaw 38 has a flat plate-like part 38a with an aperture 39 therethrough and a curved hook-like part 38b. It is in the form of a mirror image of the first clamping jaw 36. A nut 40 is welded to the flat part 38a so as to be coaxial with the aperture 39.

When the bottom barrier section 30 is mounted on the bottom part 14 of the frame 12, with the locating feet 32 on the bottom member 14d, each clamp 34 clamps the side of the barrier section 36 to the respective side member 14a, b (see Figure 6).The first clamping jaw 36 is located so that the side member 14a is received in the curved part 36b. The second clamping jaw 38 is then arranged so that the apertures 37, 39 lie coaxial with each other and the curved part 38b envelopes that part of the side member 14a which protrudes from the curved part 36b of the first jaw 36. A bolt 42 is then inserted through the apertures 37, 39 and screwed into the threaded nut 40. The bolt 42 is tightened until the jaws 36, 38 clamp the barrier section 30 and the side member 14a tightly so as to prevent fore and aft movement of the barrier section 30. The bolt 42 may engage a washer 44 on the first jaw 36. The head of the bolt 42 may receive an Allen key. Alternatively, the head may be an enlarged knurled head (not shown) to allow manual tightening of the bolt 42. Any other suitable mounting arrangement which allows secure yet removable mounting of the barrier section could be used in place of the arrangement described above.

Figure 7 shows the mounting arrangement for the side of the frame 12 in the vehicle.

A right-angled bracket 46, comprising two plates 48 each having an aperture 50 therein,is located, in use, on a seat mounting lug 52 of the vehicle. The bracket 46 is located on the lug 52 by inserting the lug 52 through the aperture 50 in one of the plates 48. One of the side mountings 22 of the barrier is attached to the other plate 48 by means of a bolt 54, which extends through the aperture 50 in the plate 48 and the aperture 24 in the side mounting 22 and screws into a nut (not shown). The bolt 54 is tightened to secure the barrier against fore and aft movement.

Figures 8a and 8b show the mounting arrangement for the bottom of the frame 14 in the vehicle.

The seat in the vehicle is mounted to the floor of the vehicle by means of a bracket 56. In order to secure the bottom part of the barrier in the vehicle, a further angled bracket 58 is attached to the seat mounting bracket 56 by means of a bolt 60. The angled bracket 58 comprises a first part 58a for mounting to the seat mounting bracket 56 and a second part 58b angled slightly relative to the first part (see Figure 8a) for receiving the bottom mounting 26. The second part 58b has an aperture 62 therein for receiving a bolt 64.

The bottom part of the barrier is placed so that each bottom mounting 26 lies on a respective angled bracket 58. The bolt 64 is then inserted through the apertures 28, 62 and is tightened to prevent movement of the barrier. The aperture 62 in the bracket 58 is preferably screw threaded so that the bolt 64 does not need to be screwed into a nut. Alternatively, a nut (not shown) may be welded to the underside of the bracket 58 coaxial with aperture 62. Again, any alternative mounting arrangement which provides secure mounting of the frame within the vehicle may be used.

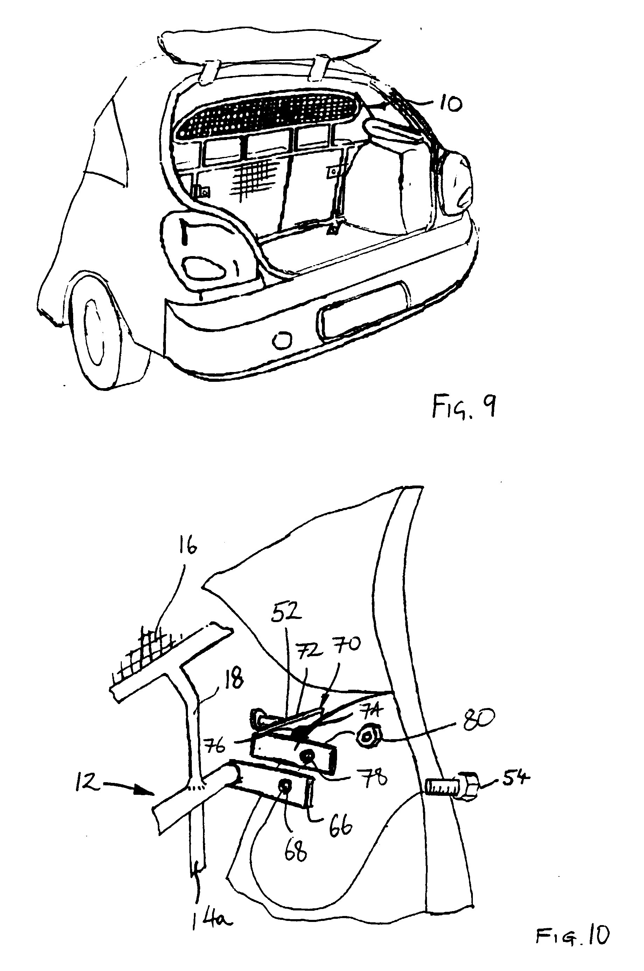

Fig 10 shows an alternative form of side mounting arrangement for the frame 12.

The barrier 10 shown in Fig 10 is substantially similar to that of Figs 1 to 9 except the horizontal top member 14c has plates 66 welded, one to each end thereof at right angles thereto. Each plate 66 has an aperture 68 therein spaced from the horizontal top member 14c.

The plate 66 is arranged to co-operate with a bracket 70 to secure the barrier 10 in the vehicle.

The bracket 70 comprises two orthogonal plates 72, 74 have respective apertures 76, 78 therein. One plate 74 has a nut 80 welded thereto coaxially with the aperture 78.

In order to secure the side of the frame 12 in the vehicle, the bracket 70 is mounted on the seat mounting lug 52, which in this case extends in a fore/aft direction of the vehicle, by inserting the lug 52 through aperture 76. The plates 66, 74 are then aligned so that the apertures 68 and 78 and the nut 80 lie coaxially. The plates 66, 74 are then secured together by screwing a bolt 54 through the apertures 68, 76 and into the nut 80.

The barrier according to the invention is advantageous over prior barriers as it does not need to be removed when the vehicle in which it is located is carrying a long load. Thus all of the screw fixings to the vehicle can be left in place. The bottom barrier section 30 is released simply by unscrewing the two bolts 42, on each side of the bottom barrier section 30. The bottom barrier section 30 is then lifted to disengage the feet 32 from the bottom member 14d and pulled out of the bottom part of the frame 12. Long loads can then be inserted through the bottom part 14 of the frame 12 to take advantage of the full length of the luggage compartment of the vehicle.

Although the embodiment described comprises a fixed top barrier section, it is envisaged that both barrier sections could be removably mounted to the frame. Moreover, while top and bottom barrier sections have been described, left and right hand barrier sections are contemplated, one or both of which may be removable from the frame. That arrangement is especially useful in vehicles with split folding rear seats whereby one of the rear seats can be folded down to accommodate a long load while the other is left upright for a passenger.

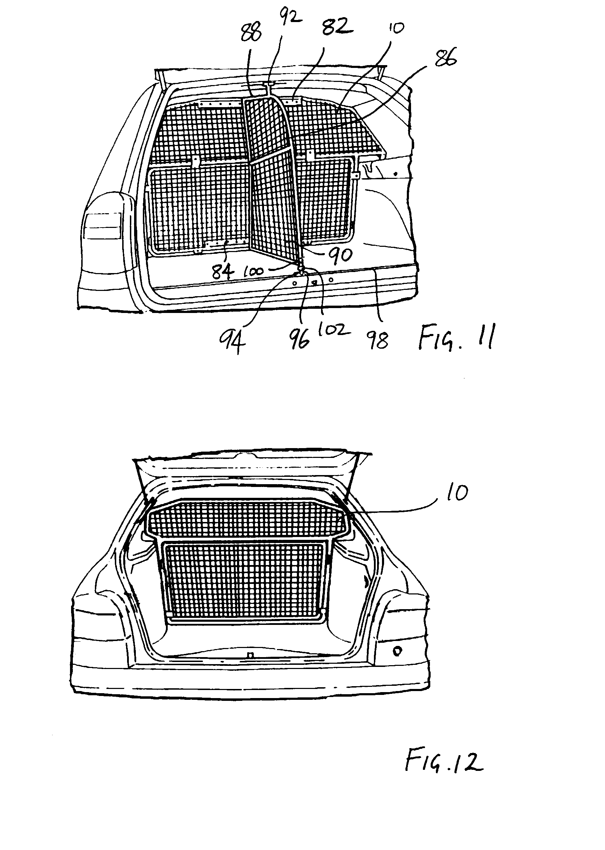

In fig. 11 an alternative barrier arrangement is shown in an estate car. The barrier 10 is substantially similar to that shown in figs 1 to 10 except the barrier 10 includes two attachment strips 82, 84. One attachment strip 82 is arranged just beneath the upper member 16b of the top part 16 of the frame 12. The other attachment strip 84 is located just above the lower member 14d of the bottom part 14.

A partitioning barrier member 86, comprising a peripheral frame 88 conforming substantially to the internal shape of the vehicle in which it is located and wire mesh 90, has brackets (not shown) on the front part of the peripheral frame. The partitioning barrier member is attached to the barrier 10 by screw threaded fasteners which pass through the brackets and are secured in the attachment strips 82,84. The partitioning barrier member 86 can be located in a series of positions according to the location of the apertures in the attachment strips 82, 84.

The partitioning barrier member 86 is further secured in the vehicle by means of an engaging member 92 which projects upwardly from the top of the frame 88 to engage part of the ceiling of the vehicle and by a height adjustment arrangement 94.

The height adjustment arrangement 94 includes a tongue 96 which engages in a groove 98 in the floor of the vehicle and a screw threaded projection 100 with a knurled nut 102 thereon. Part of the frame of the partitioning barrier member 86 is retained in compression between the nut 102 and the engaging member 92.

The partitioning barrier member 86 divides the cargo area of the vehicle into two distinct areas. This is useful where, for instance, the user wishes to transport their dog and food in the cargo area and wishes to separate the dog from the food.

Moreover, as mentioned above the removable section of the barrier 10 could be left and right hand sections corresponding to the split/fold rear seats. In such a case the partitioning barrier member is locatable substantially at the position of the split whereby part of the rear seats can be folded down to allow storage of long items while partitioning off part of the cargo area for, eg a dog.

Fig. 12 shows a guard which is substantially similar to that shown in figs 1 to 10 in place in a hatchback vehicle.

## Claims

1. A barrier for use in a vehicle, the barrier comprising a frame supporting a barrier section removable from the frame.

2. A barrier according to claim 1 in which the frame has a mounting at a lower part thereof for mounting the frame to an existing fixture in a vehicle.

3. A barrier according to claim 2 in which the existing fixture is a seat mounting of the vehicle.

4. A barrier according to claim 1, 2 or 3 in which the frame has a side mounting on the side thereof.

5. A barrier according to claim 4 in which the side mounting mounts the frame to an existing fixture in a vehicle.

6. A barrier according to claim 5 in which the existing fixture is a seat securing lug of the vehicle.

7. A barrier according to any preceding claim in which the barrier section comprises location means at a bottom part thereof to locate at least part of the barrier section on the frame.

8. A barrier according to any preceding claim in which the barrier section comprises location means at one or both sides thereof.

9. A barrier according to claim 7 in which the location means at the bottom part of the barrier comprises a part cylindrical member arranged to cooperate with the bottom part of the frame.

10. A barrier according to claim 8 in which the location means at the side of the barrier comprises a clamp for clamping a part of the frame.

11. A barrier according to any preceding claim in which the frame supports a further barrier section.

12. A barrier according to claim 11 in which the further barrier section is fixed to the frame.

13. A barrier according to any preceding claim in which the frame has a top part which supports one barrier section and a bottom part which supports the other barrier section.

14. A barrier according to claim 13 in which said one barrier section is fixed to the top part of the frame and said other barrier section is removably supported by the bottom part of the frame.

15. A barrier according to any preceding claim in which a partitioning barrier member is provided for attachment to the barrier so as to partition the area behind the barrier into at least two parts.

16. A barrier according to claim 15 in which the barrier includes an attachment strip comprising an elongate member having a plurality of screw threaded apertures therein and the partitioning barrier member includes a bracket on its forward edge attachable by means of a screw threaded fastener to the attachment strip on the barrier.

17. A barrier according to any preceding claim in which the removable barrier section comprises two separate removable barrier parts, each being separately removably supported on the frame.

18. A barrier according to claim 17 in which the width of one said barrier part is substantially 60 percent of the width of the whole removable barrier section and the width of the other said barrier part is substantially 40 percent of the width of the removable barrier section.

19. A barrier in a vehicle, the barrier comprising a frame supporting a barrier section removable from the frame.

20. A barrier according to claim 19 in which the barrier is located behind the rear seats in the vehicle, the frame comprising top and bottom parts supporting respective barrier sections, the top of the frame spanning at least part of the space between the top of the rear seats and the roof of the vehicle.
